# EUROPÄISCHE PATENTANMELDUNG

(11) **EP 1 742 023 A1**
(43) Veröffentlichungstag der Anmeldung: **10.01.2007**
(21) Anmeldenummer: 05405427.5
(22) Anmeldetag: 06.07.2005
(51) Int. Cl.: G01D 5/347, B23Q 17/22, F16C 29/06, G01D 5/245

(54) **Linearführungssystem mit Vorrichtung zur Positionsmessung**

(71) Anmelder: Schneeberger Holding AG, 4914 Roggwil (CH)
(72) Erfinder: Schneeberger, Hans-Martin, 4900 Langenthal (CH); Mischler, Ernst, 4914 Roggwil BE (CH); Ramonat, Lutz Dr., 4900 Langenthal (CH)
(74) Vertreter: EGLI-EUROPEAN PATENT ATTORNEYS

(57) **Zusammenfassung**

Um bei einem Linearführungssystem mit einem Massstab (10) zum Messen des von einem beweglichen Führungswagen (2) gegenüber einer Führungsschiene (1) zurückgelegten Weges, ein problemloses Messen auch dann zu ermöglichen, wenn die Schiene zentral angeordnete Schraubenlöcher aufweist, wird vorgeschlagen, den Massstab (10) am Rand der oberen Fläche (14) der Führungsschiene (1) anzuordnen. Der Führungswagen weist eine nach oben offene Ausnehmung (20) auf, in der der Mesesensor (32) befestigt ist und durch eine Bohrung (24), in Wirkverbindung mit dem Massstab (10) steht. Vorzugsweise ist die Ausnehmung (20) am vorderen oder hinteren Ende des Führungswagens teilweise ausserhalb der Tragzone des Führungswagens (2) ausgebildet.

## Beschreibung

Die Erfindung betrifft ein Linearführungsaystem mit einer Einrichtung zum Messen des von einem beweglichen Führungswagen gegenüber einer festen, gradlinigen Führungsschiene zurückgelegten Weges. Insbesondere betrifft die Erfindung ein solches System, bei der die Führungsschiene einen Massstab und der Führungswagen einen Messkopf mit zumindest einem Sensor aufweist, der für eine vorzugsweise berührungslose Abtastung des Massstabes ausgebildet ist.

Ein typisches Linearführungssystem mit einer Messeinrichtung ist aus der WO-A-91/16594 bekannt. Dort wurde vorgeschlagen, eine Massverkörperung unmittelbar auf eine Führungsfläche oder auf bzw. in das Material eines länglichen Trägers und dieser auf die Führungsfläche aufzubringen.

Ein gattungsgemässes System wurde in der DE-A-197 42 081 grundsätzlich bekannt. Dort wird weiterhin vorgeschlagen, dass der Führungswagen eine zum Massstab hin offene Ausnehmung aufweisen soll, in welcher der Messkopf anzuordnen sei. Weiterhin wird dort vorgeschlagen, dass die Ausnehmung eine auf dem Führungswagen angeordnete, zentrale, durchgehende Nut sein soll, innerhalb welcher der Messkopf am Führungswagen befestigt ist. Eine solche Anordnung hat sich nun allerdings für den praktischen Einsatz als wenig brauchbar gezeigt. Es gibt nämlich eine ganze Reihe von Anwendungen, bei denen gegenüberliegend zum zentralen Bereich des Führungswagens auf der Führungsschiene Befestigungselemente, zumeist Schraubenlöcher angeordnet sind. Damit erscheint die Messanordnung, bei der der Messkopf in einer zentral angeordneten Ausnehmung installiert ist, nicht in jedem Fall sinnvoll zu sein. Zwar könnte man den Massstab auch an einer anderen Oberfläche der Führungsschiene und die Messanordnung dementsprechend gegenüberliegend am Führungswagen anordnen. Eine solche Anordnung ist aus der JP-A-57/077 903 bekannt, aber durchaus mit den in der EP-0 905 486 B1 diskutierten Nachteilen behaftet.

Lösbar wäre diese Aufgabe grundsätzlich auch mit einer Anordnung, bei der dem Vorschlag aus der EP-0 905 486 gefolgt würde, aber bei der der Massstab nach dem Befestigen der Schiene aufgebracht wird. Es hat sich aber herausgestellt, dass dies zu einer Verringerung der Messgenauigkeit führt und auch nur mit grossem Aufwand möglich ist. Von einer solchen Lösung sollte also abgesehen werden.

Weiterhin hat sich die zentrale Anordnung der Ausnehmung für die Aufnahme der Messanordnung auch noch aus einem anderen Grund als nachteilig herausgestellt. Die zentrale Anordnung der als Nut ausgestalteten, zu dem Massstab hin offenen Ausnehmung, kann nämlich zu einer verminderten Tragfähigkeit, Steifigkeit oder Lebensdauer des Führungswagens führen, wie sich herausgestellt hat.

Aufgabe der vorliegenden Erfindung ist die Schaffung eines gattungsgemässen Linearführungssystems, bei dem die Nachteile des Standes der Technik überwunden werden können. Insbesondere soll das Messsystem der Linearführung einsetzbar sein, wenn die Schiene zentral angeordnete Schraubenlöcher aufweist und diese Schraubenlöcher sollen beim Messvorgang keinen oder zumindest möglichst keinen Einfluss haben.

Diese Aufgabe wird mittels einem Linearführungssystem nach Anspruch 1 gelöst. Dabei haben die Massnahmen der Erfindung zunächst einmal zur Folge, dass durch die Verlegung des Massstabes an den Rand der Schiene der schädliche Einfluss der Schrauben und Schraubenlöcher vermieden werden kann. Überraschenderweise hat sich aber auch noch herausgestellt, dass es vorteilhaft ist, den Massstab an den Rand zu verlegen, selbst wenn der verfügbare Platz neben den Schraubenlöchern noch ausreichend gross ist, sei es, weil noch genügend Platz neben den Schraubenlöchern wäre oder sei es, dass die schädliche Wirkung der Schraubenlöcher auf andere Art beseitigt wäre. Die Oberfläche der Führungsschiene kann nämlich im angeschraubten Zustand der Schiene verzogen werden. Die entsprechende Änderung in der Höhe ist dabei am geringsten an den Schienenseiten sowie in der Mitte zwischen zwei Schrauben. Durch das Verschieben des Massstabes an den Rand erreicht man überraschenderweise eine höhere Genauigkeit.

Besonders vorteilhaft ist noch überraschenderweise eine bestimmte Ausgestaltung der Erfindung, bei der das Sensorpaket nicht nur bezüglich der Seitenposition, sondern auch bezüglich der Position längs des Wagens am Rand angeordnet ist. Wenn nämlich - für eine solche konstruktive Ausgestaltungen der Erfindung - die Höhe des Sensors kleiner ist als die Höhe des Führungswagens, in einem solchen Falle also so gebaut werden kann, dass der Sensor vollständig im Führungswagen eingelassen ist, so ergibt sich der Vorteil, dass für die Kabelführungen weniger einschneidende Massnahmen notwendig sind, insbesondere eine weniger lange Kabelführungsnut. Da eine solche Kabelführungsnut allenfalls die Tragfähigkeit verringern kann, wird durch die Anordnung nach Anspruch 1 diese Schwächung der Tragfähigkeit vermieden oder zumindest substantiell verringert.

Wenn der Sensor nun im Führungswagen eingebaut ist, sich aber teilweise ausserhalb der Tragzone befindet, hat dies weitere Vorteile bezüglich der Tragfähigkeit, Steifigkeit und der Lebensdauer des Linearführungssystems gemäss der vorliegenden Erfindung gegenüber einem solchen nach dem Stand der Technik.

Gegenstand der Erfindung ist ausserdem ein entsprechendes Verfahren.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weiterhin ist die Vorrichtung nicht auf eine Verwendung gemäss dem beanspruchten Verfahren beschränkt. Sowohl die Vorrichtung als auch das Verfahren lassen sich für andere Anwendungen einsetzen.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine perspektivische Darstellung eines Linearführungssystems mit einer Führungsschiene und einem Führungswagen, an dem die Massnahmen der vorliegenden Erfindung - beispielhaft - ausgeführt sind;
- Fig. 2: die Führungsschiene gemäss Figur 1 mit einemschematisch - dargestellten Massstab;

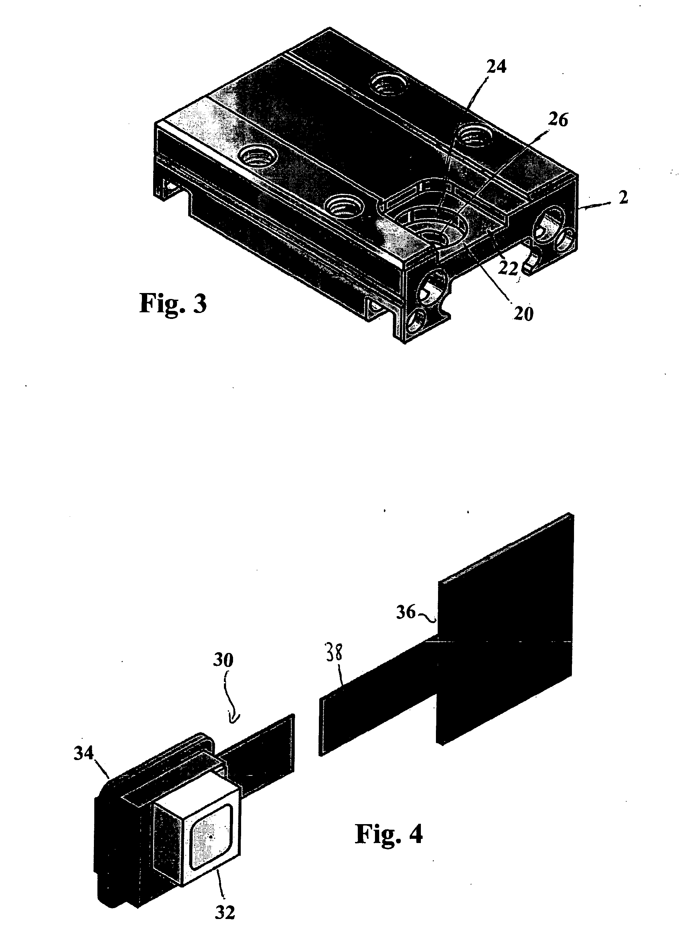

- Fig. 3: den Führungswagen gemäss Figur 1 mit der Ausnehmung zum Einbringen des Messsensors;
- Fig. 4: den Messsensor nach Figur 1 mit seiner flexiblen Versorgung;
- Fig. 5: eine schematische Darstellung einer Anordnung mit einer Referenzspur und einer Inkrementalspur;
- Fig. 6: eine schematische Darstellung des Verziehens der Oberfläche der Führungsschiene durch die Befestigungsschrauben in stark überzeichneter Darstellung; und
- Fig. 7: eine Darstellung des Führungswagens mit der Tragzone.

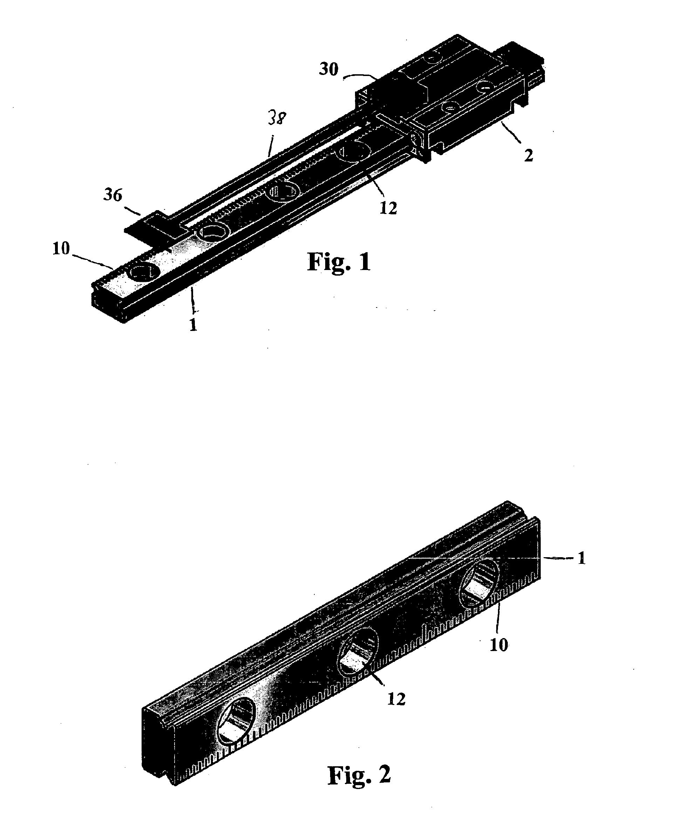

In Figur 1 ist ein Linearführungssystem als Ausführungsbeispiel der vorliegenden Erfindung dargestellt, welches aus dem auf der Führungsschiene 1 angeordneten Führungswagen 2 und einem Sensorpaket 3 besteht.

Die Führungsschiene 1, die - wie in Figur 2 dargestellt - aus mehreren hintereinander angeordneten und üblicherweise auf einem hier nicht dargestellten Montageelement fest montierten Schienenelementen besteht, ist mit einem Massstab 10 versehen. Der Massstab 10 ist - gemäss der vorliegenden Erfindung - am Rand der Führungsschiene 1 als Inkrementalspur ausgebildet. Im zentralen Bereich der Führungsschiene 1 sind nämlich Befestigungslöcher 12 zum Befestigen der Führungsschiene 1 auf den hier nicht dargestellten Montageelementen vorhanden. Insofern ist der Massstab 10 neben den Löchern vorgesehen. Dieser Massstab ist im vorliegenden Ausführungsbeispiel als optischer Massstab 10 ausgebildet, der dafür vorgesehen ist, dass ein optischer Sensor ihn abzutasten vermag. Alternativ ist selbstverständlich im Rahmen der vorliegenden Erfindung auch möglich, einen Massstab 10 für einen anderen Messvorgang, z.B. einem mechanischen Abtastvorgang, einem magnetischen Abtastvorgang oder gar einem akustischen Vorgang vorzusehen. Insofern ist der optische Massstab 10 - im Zusammenhang mit dem optischen Sensor nur als - hier bevorzugtes - Ausführungsbeispiel zu sehen.

Der Führungswagen 2 ist in einer herkömmlichen Weise ausgebildet. Auf seiner Oberfläche, nämlich der Oberseite des Führungswagens 2, ist eine Ausnehmung 20 vorhanden, die in der ersten Schicht als Nut 22 ausgebildet ist. Darunter liegend - also quasi in einer zweiten Schicht - ist die Ausnehmung zudem noch als Bohrung 24, aber nicht als durch den Führungswagen 2 durchgehende Bohrung zu erkennen. Die zweistufige Ausbildung der Ausnehmung ist im vorliegenden Ausführungsbeispiel einerseits der vorgesehenen Form des Sensorpakets 30 angepasst, führt aber andererseits zu einer optimalen Stabilität des Führungswagens 2 mit dem Sensor. Es hat sich nämlich herausgestellt, dass eine Anordnung eines Messsensors in einer nach unten offenen Ausnehmung nachteilig ist für die Stabilität des Linearführungssystems.

Um mit dem Massstab 10 in optische Verbindung treten zu können, ist für den Sensor 32 eine weitere, nunmehr durch den Führungswagen durchgehende Bohrung 26 vorgesehen. Diese Bohrung wird aus Gründen der Stabilität des Systems möglichst klein gehalten.

Das Sensorpaket 30 besteht aus dem eigentlichen optischen Messsensor 32, einem Sensorbefestigungselement 34 und einer Versorgung 36. Die Versorgung 36 ist mit einem flexiblen Element 38 mit dem Sensor verbunden.

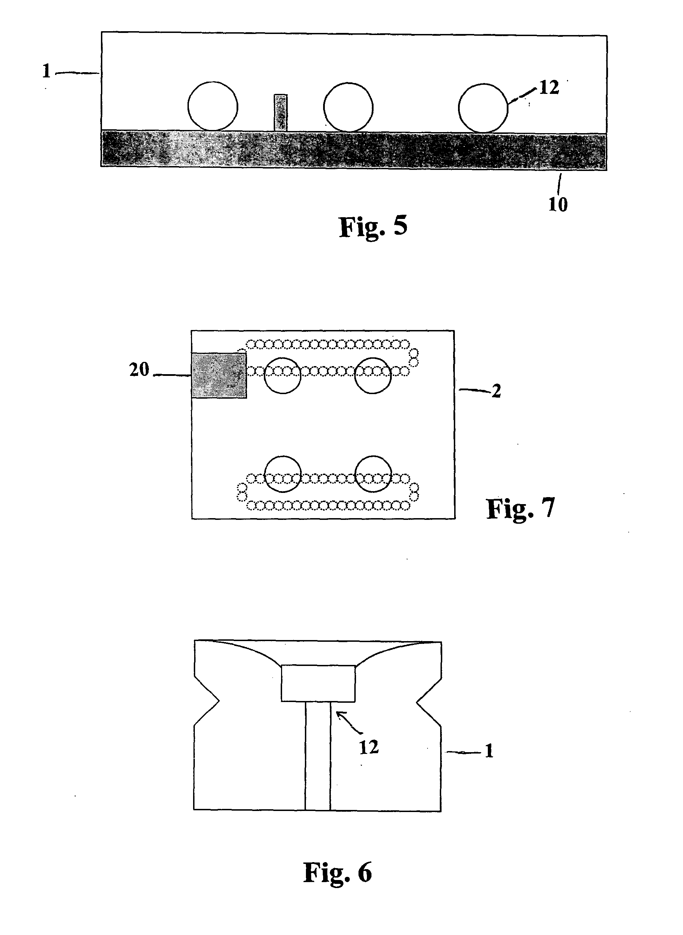

Durch die Verlegung des Messstabes an den Rand der Schiene kann also der schädliche Einfluss der Schrauben und Schraubenlöcher 12 vermieden werden. Es hat sich aber auch noch herausgestellt, dass es vorteilhaft ist, den Massstab an den Rand zu verlegen, selbst wenn der verfügbare Platz neben den Schraubenlöchern noch ausreichend gross ist, sei es, weil noch genügend Platz neben den Schraubenlöchern wäre oder sei es, dass die schädliche Wirkung der Schraubenlöcher auf andere Art beseitigt wäre. Die Oberfläche der Führungsschiene kann nämlich im angeschraubten Zustand der Schiene verzogen werden, gezeigt in Figur 6 in übertriebener, schematischer Darstellung. Die entsprechende Änderung in der Höhe ist dabei am geringsten an den Schienenseiten sowie in der Mitte zwischen zwei Schrauben. Durch das Verschieben des Massstabes an den Rand erreicht man überraschenderweise eine höhere Genauigkeit.

Im vorliegenden Ausführungsbeispiel ist die Höhe des Sensorpakets 30 grösser als die Höhe des Führungswagens. Wenn aber in einem Ausführungsbeispiel der Erfindung so gebaut wird, dass der Sensor vollständig im Führungawagen eingelassen ist, so ergibt sich der Vorteil, dass für die Kabelführungen weniger einschneidende Massnahmen notwendig sind, insbesondere eine weniger lange Kabelführungsnut. Da eine solche Kabelführungsnut allenfalls die Tragfähigkeit verringern kann, wird durch eine solche Anordnung eine Schwächung der Tragfähigkeit vermieden oder zumindest substantiell verringert.

Wenn - in einem Ausführungsbeispiel der Erfindung - der Sensor nun im Führungswagen eingebaut ist, sich aber teilweise ausserhalb der Tragzone - Figur 7 - befindet, hat dies weitere Vorteile bezüglich der Tragfähigkeit, Steifigkeit und der Lebensdauer des Linearführungssystems gemäss der vorliegenden Erfindung gegenüber einem solchen nach dem Stand der Technik.

## Patentansprüche

1. Linearführungssystem mit
- zumindest einer festen, gradlinigen Führungsschiene (1),
- zumindest einem auf der Führungsschiene (1) linear beweglich angeordneten Führungswagen (2),
- einer Einrichtung (30) zum Messen des von dem Führungswagen (2) gegenüber der Führungsschiene (1) zurückgelegten Weges, wobei in der Führungsschiene (1) ein Massstab (10) und im oder auf dem Führungswagen (2) ein Messkopf (30) mit zumindest einem Sensor (32) für eine Abtastung des Massstabes (10) ausgebildet ist,
**dadurch gekennzeichnet, dass**
- der Massstab (10) so am Rand der oberen Fläche (14) der Führungsschiene (1) angeordnet ist, dass er an einem der Ränder höchstens 10% der Breite der Führungsschiene freilässt,
- der Messsensor (32) so in den Wagen eingebaut ist, dass er den Massstab (10) abtasten kann,
wobei der Führungswagen eine nach oben offene Ausnehmung (20) aufweist,
- der Messsensor (32) in der Ausnehmung (20) befestigt ist und durch zumindest eine Bohrung (24), vorzugsweise ein rundes Loch, in Wirkverbindung, vorzugsweise in abstandsgehaltener optischer Verbindung, mit dem Massstab (10) steht, und dass
- der Messsensor (32) so ausgebildet ist, dass er bei einer Bewegung des Führungswagens (2) auf der Führungsschiene (1) die Informationen des Massstabes (10) erfassen kann.

2. Linearführungssystem nach Anspruch 1, **dadurch gekennzeichnet, dass** die Ausnehmung (20), die zur Befestigung des Messsensors (32) vorgesehen ist, am vorderen oder hinteren Ende des Führungswagens teilweise ausserhalb der Tragzone des Führungswagens (2) ausgebildet ist.

3. Linearführungssystem nach Anspruch 1 oder 2, **dadurch gekennzeichnet, dass** im zentralen Bereich der Führungsschiene (1) Schraubenlöcher (12) zur Befestigung der Führungsschiene (1) ausgebildet sind.

4. Linearführungssystem nach Anspruch 3, **dadurch gekennzeichnet, dass** auf der Führungsschiene (1) weiterhin Referenzmarken ausgebildet sind

5. Linearführungssystem nach Anspruch 4, **dadurch gekennzeichnet, dass** die Referenzspuren im zentralen Bereich der Führungsschiene (1) zwischen den Schraubenlöchern (12) angeordnet sind.

6. Linearführungssystem nach Anspruch 4 oder 5, **dadurch gekennzeichnet, dass** der Messeensor (32) so ausgebildet ist, dass er bei einer Bewegung des Führungswagens (2) auf der Führungsschiene (1) sowohl die Informationen des Massstabes (10) wie auch die Informationen der Referenzmarke erfassen kann.

7. Linearführungssystem nach Anspruch 4 oder 5, **dadurch gekennzeichnet, dass** auf dem Führungswagen (2) ein weiterer Sensor angeordnet ist, der bei einer Bewegung des Führungswagens (2) auf der Führungsschiene (1) die Informationen der Inkrementalspur erfassen kann.

8. Verfahren zum Bewegen eines Führungswagens (2) auf einer Führungsschiene (1) eines Linearbewegungssystems, insbesondere eines Systems nach einem der Ansprüche 1 bis 6, wobei mit einer Einrichtung (30, 32) zum Messen des von dem Führungswagen (2) auf der Führungsschiene (1) zurückgelegten Weges mit Hilfe eines auf der Führungsschiene (1) angebrachten Massstabs (10) und einem im oder auf dem Führungswagen (2) angeordneten Messsenssor (30, 32) mit zumindest einem Sensor durch eine Abtastung des Massstabes (10) die Bewegung des Führungswagens (2) gegenüber der Führungsschiene (1) gemessen wird,
**dadurch gekennzeichnet, dass**
- der Messsensor (30, 32) in einer Ausnehmung (20) im Führungswagen (2) befestigt ist und durch eine Bohrung (24), vorzugsweise ein Loch, in Wirkverbindung, vorzugsweise in abstandsgehaltener optischer Verbindung, mit dem Massstab (10) steht, wobei der Massstab (10) so am Rand der oberen Fläche der Führungsschiene (1) angeordnet ist, dass er an einem der Ränder höchstens 10% freilässt, der Führungswagen (2) eine nach oben offene Ausnehmung (20, 22), aufweist, und dass
- der Messsensor (30, 32) bei einer Bewegung des Führungswagens (2) auf der Führungsschiene (1) die Informationen des Massstabes (10) erfasst.

9. Verfahren nach Anspruch 8, **dadurch gekennzeichnet, dass** der Messsensor (32) die Informationen des Massstabe (10) so erfasst, dass sie am vorderen oder hinteren Ende des Führungswagens teilweise ausserhalb der Tragzone des Führungswagens (2) erfasst werden.

10. Verfahren nach Anspruch 8 oder 9, **dadurch gekennzeichnet, dass** auf der Führungsschiene (1) weiterhin Referenzmarken ausgebildet sind, und dass der Messsensor bei einer Bewegung des Führungswagens (2) auf der Führungsschiene (1) sowohl die Informationen des Massstabes (10) wie auch die Informationen der Referenzmarken erfasst.

11. Verfahren nach Anspruch 8 oder 9, **dadurch gekennzeichnet, dass** auf der Führungsschiene (1) weiterhin Referenzmarken ausgebildet sind und auf dem Führungswagen (2) ein weiterer Sensor angeordnet ist, der bei einer Bewegung des Führungswagens (2) auf der Führungsschiene (1) die Informationen der Referenzmarken erfasst.
